# EUROPÄISCHE PATENTANMELDUNG

(11) **EP 1 524 629 A1**
(43) Veröffentlichungstag der Anmeldung: **20.04.2005**
(21) Anmeldenummer: 03405752.1
(22) Anmeldetag: 17.10.2003
(51) Int. Cl.: G07C 9/00, G07B 15/02

(54) **Berechtigungskontrollverfahren sowie dafür geeignete Vorrichtungen**

(71) Anmelder: Swisscom Mobile AG, 3050 Bern (CH)
(72) Erfinder: Lagadec, Roger, 8105 Regensdorf (CH); Cantini, Renato, 1782 Belfaux (CH); Messmer, Bruno, 3600 Thun (CH)
(74) Vertreter: Vogel, Dany

(57) **Zusammenfassung**

Es werden ein Berechtigungskontrollverfahren sowie dafür geeignete Vorrichtungen vorgeschlagen, welche Berechtigungsdaten über eine Benutzerschnittstelle (11) einer elektronischen Wiedergabevorrichtung (1) wiedergeben. Während der Wiedergabe der Berechtigungsdaten über die Benutzerschnittstelle (11) einer ersten Wiedergabevorrichtung (1) werden die Wiedergabeattribute verändert. Die Wiedergabe der Berechtigungsdaten über die Benutzerschnittstelle (11) der ersten Wiedergabevorrichtung (1) wird mit der Wiedergabe von Referenzdaten über eine Benutzerschnittstelle (21) einer zweiten elektronischen Wiedergabevorrichtung (2) verglichen. Die Berechtigung wird gewährt, wenn eine Übereinstimmung zwischen der Wiedergabe der Berechtigungsdaten über die Benutzerschnittstelle (11) der ersten Wiedergabevorrichtung (1) und der Wiedergabe der Referenzdaten über die Benutzerschnittstelle (21) der zweiten Wiedergabevorrichtung (2) besteht und Veränderungen der Wiedergabeattribute im Wesentlichen zeitsynchronisiert sind. Die dynamische Änderung der Wiedergabeattribute bei der Wiedergabe der Berechtigungsdaten und der Wiedergabe der Referenzdaten, macht das unberechtigte Kopieren von Bildinhalten oder Toninhalten zur Fälschung einer Berechtigung praktisch unmöglich. Eine gleichzeitige Wiedergabe der Berechtigungsdaten und der Referenzdaten erübrigt zudem Rückfragen an eine Berechtigungszentrale (3).

## Beschreibung

### Technisches Gebiet

Die vorliegende Erfindung betrifft ein Berechtigungskontrollverfahren sowie dafür geeignete Vorrichtungen. Die Erfindung betrifft insbesondere ein Berechtigungskontrollverfahren, in welchem Berechtigungsdaten über eine Benutzerschnittstelle einer elektronischen Wiedergabevorrichtung wiedergegeben werden sowie ein System zur Berechtigungskontrolle, das eine elektronische Wiedergabevorrichtung mit einer Benutzerschnittstelle zur Wiedergabe der Berechtigungsdaten umfasst, und ein Computerprogrammprodukt mit Computerprogrammcodemitteln zur Steuerung eines oder mehrerer Prozessoren der Wiedergabevorrichtung.

### Stand der Technik

Die Verwendung von elektronischen Wiedergabevorrichtungen für Wiedergabe von Berechtigungsdaten über eine Benutzerschnittstelle in Form einer Anzeige hat den Vorteil, dass keine einmaligen Papiertickets hergestellt und verteilt werden müssen. Elektronische Wiedergabevorrichtungen für die Wiedergabe von Berechtigungsdaten haben den Vorteil, dass sie mehrfach und zum Bezug von verschiedenen Dienstleistungen oder zum Zugang zu verschiedenen Systemen oder Gebäuden verwendbar sind. Zudem können elektronische Wiedergabevorrichtungen mit Kommunikationsmodulen versehen werden, so dass Berechtigungsdaten dynamisch über ein Telekommunikationsnetz in die Wiedergabevorrichtungen geladen werden können.

In der Patentanmeldung DE 100 34 275 wird ein Berechtigungskontrollverfahren beschrieben, in welchem Zugangsberechtigungen über ein Mobilfunknetz an eine mobile Vorrichtung übertragen werden und dort für einen Barcodeleser (maschinen-)lesbar auf der Anzeige dargestellt werden.

In der Patentanmeldung US 2003/0054801 wird ein Berechtigungskontrollverfahren beschrieben, in welchem Zugangsberechtigungen über ein Mobilfunknetz an eine mobile Vorrichtung übertragen werden, wo sie durch eine benutzerunabhängige Funktion in grafischer Form auf einer Anzeige dargestellt werden und von einem Kontrolleur mit seinen Augen betrachtet werden können. Zudem kann der Kontrolleur zur Überprüfung der Echtheit der grafisch dargestellten Berechtigungsdaten nach US 2003/0054801 mittels eines Kommunikationsendgeräts eine Rückfrage an eine Berechtigungszentrale übermitteln. Dabei wird die Übermittlung der Berechtigungsdaten, die dem betreffenden Benutzer respektive der betreffenden mobilen Vorrichtung zugeordnet sind, von der Berechtigungszentrale an das Kommunikationsendgerät des Kontrolleurs angefordert. Um unberechtigte Kopien der grafisch dargestellten Berechtigungsdaten zu vermeiden, sind nach US 2003/0054801 allerdings auch zusätzliche maschinenlesbare visuelle Merkmale nötig.

### Darstellung der Erfindung

Es ist eine Aufgabe der vorliegenden Erfindung, ein neues Berechtigungskontrollverfahren sowie dafür geeignete Vorrichtungen vorzuschlagen, welche nicht die Nachteile des Stands der Technik aufweisen. Insbesondere sollen ein neues Berechtigungskontrollverfahren sowie dafür geeignete Vorrichtungen vorgeschlagen werden, welche ermöglichen, dass Berechtigungsdaten über eine Benutzerschnittstelle einer elektronischen Wiedergabevorrichtung wiedergegeben werden können, ohne dass zur Überprüfung der Echtheit der wiedergegebenen Berechtigungsdaten Rückfragen an eine Berechtigungszentrale notwendig sind, und ohne dass die Berechtigungsdaten zur Vermeidung von unberechtigten Kopien in maschinenlesbarer Form wiedergegeben werden müssen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Die Berechtigungsdaten werden über eine Benutzerschnittstelle einer ersten elektronischen Wiedergabevorrichtung wiedergegeben.

Die oben genannten Ziele werden durch die vorliegende Erfindung insbesondere dadurch erreicht, dass während der Wiedergabe der Berechtigungsdaten über die Benutzerschnittstelle der ersten Wiedergabevorrichtung Wiedergabeattribute verändert werden. Die Wiedergabeattribute umfassen insbesondere über die menschlichen Sinnesorgane wahrnehmbare Attribute, zum Beispiel visuelle Attribute von darstellbaren Objekten, wie Farbe, Orientierung, Bestimmung eines Bildausschnitts, Position oder Schrifttyp, oder Audioattribute von akustisch wiedergebbaren Objekten, wie Lautstärke, Tonhöhe oder Tonlänge. Die Wiedergabe der Berechtigungsdaten über die Benutzerschnittstelle der ersten Wiedergabevorrichtung wird mit der Wiedergabe von Referenzdaten über eine Benutzerschnittstelle einer zweiten elektronischen Wiedergabevorrichtung verglichen. Die Berechtigung wird gewährt, wenn eine Übereinstimmung zwischen der Wiedergabe der Berechtigungsdaten über die Benutzerschnittstelle der ersten Wiedergabevorrichtung und der Wiedergabe der Referenzdaten über die Benutzerschnittstelle der zweiten Wiedergabevorrichtung besteht und Veränderungen der Wiedergabeattribute im Wesentlichen zeitsynchronisiert sind. Die Wiedergabe der Berechtigungsdaten durch die erste Wiedergabevorrichtung und die Wiedergabe der Referenzdaten durch die zweite Wiedergabevorrichtung wird beispielsweise von einem Kontrolleur über seine Sinne wahrgenommen und der Kontrolleur kann die Berechtigung gewähren, wenn durch beide Wiedergabevorrichtungen übereinstimmende Inhalte zeitgleich und mit synchronisierten Veränderungen wiedergegeben werden. Das heisst, eine Berechtigung ist beispielsweise gewährbar, wenn durch die beiden Wiedergabevorrichtungen zeitgleich übereinstimmende visuelle Inhalte mit den gleichen visuellen Attributen auf ihren Anzeigen dargestellt und/oder zeitgleich übereinstimmende hörbare Inhalte mit den gleichen Audioattributen über ihre elektroakustischen Wandler wiedergegeben werden. Die Berechtigungsdaten und die Referenzdaten umfassen beispielsweise Dienstbezeichnungen in Schriftform, wobei die Berechtigung für den betreffenden Dienst nur gewährbar ist, wenn die Dienstbezeichnung durch die beiden Wiedergabevorrichtungen zum gleichen Zeitpunkt mit der gleichen Schriftart wiedergegeben wird. Die Berechtigungsdaten umfassen beispielsweise Benutzeridentifizierungsdaten, die nur als authentisch akzeptiert werden, wenn sie mit Wiedergabeattributen wiedergegeben werden, die mit dafür vorgesehenen Wiedergabeattributen übereinstimmen, die zum betreffenden Zeitpunkt mit den Referenzdaten wiedergegeben werden. Zum Beispiel ist eine Fotografie des Benutzers als Benutzeridentifizierung gewährbar, wenn sie in der Anzeige an der Position angezeigt wird, die mit der Position übereinstimmt, die gleichzeitig dafür in der Anzeige mit den wiedergegebenen Referenzdaten angezeigt wird. Da sich die Wiedergabe der Berechtigungsdaten durch die dynamische Änderung der Wiedergabeattribute dauernd ändert, kann die unberechtigte Kopie von Bildinhalten oder Toninhalten zur Fälschung einer Berechtigung praktisch ausgeschlossen werden. Zudem erübrigen sich Rückfragen an eine Berechtigungszentrale, da die Berechtigungsdaten und die Referenzdaten zur gleichen Zeit durch die beiden Wiedergabevorrichtungen wiedergegeben werden. Wenn die Berechtigungsdaten Dienstleistungen, Systeme oder Gebäude betreffen, die gleichzeitig von mehreren Benutzern benutzt werden, kann die Wiedergabe der Berechtigungsdaten über die Benutzerschnittstellen der elektronischen Wiedergabevorrichtungen der Benutzer ebenfalls synchronisiert erfolgen, so dass ein Kontrolleur über keine eigene zweite elektronische Wiedergabevorrichtung verfügen muss, sondern die Wiedergabe der Berechtigungsdaten über die Benutzerschnittstellen der elektronischen Wiedergabevorrichtungen der Benutzer untereinander vergleichen kann. Beispielsweise kann so die Berechtigung von Zugspassagieren überprüft werden, indem der Kontrolleur kontrolliert, ob die Wiedergabevorrichtungen der Passagiere untereinander übereinstimmende Inhalte zeitgleich und mit synchronisierten Veränderungen wiedergegeben.

Vorzugsweise werden die Berechtigungsdaten in einem Datenspeicher der ersten Wiedergabevorrichtung gespeichert, die Referenzdaten werden in einem Datenspeicher der zweiten Wiedergabevorrichtung gespeichert, die Wiedergabe der Berechtigungsdaten über die Benutzerschnittstelle der ersten Wiedergabevorrichtung basiert auf einem ersten Synchronisierungssignal und die Wiedergabe der Referenzdaten über die Benutzerschnittstelle der zweiten Wiedergabevorrichtung basiert auf einem zweiten Synchronisierungssignal. Durch die Speicherung der Berechtigungsdaten und der Referenzdaten in den Wiedergabevorrichtungen können Berechtigungen individuell auf Wiedergabevorrichtungen der Benutzer übertragen werden, ohne dass eine Zuordnung von Berechtigungsdaten zu Benutzern in einer Berechtigungszentrale gespeichert und verwaltet werden muss. Die Speicherung der Berechtigungsdaten in einer Wiedergabevorrichtung ermöglicht auch die Realisierung von Berechtigungs- oder Zutrittstickets, die mehrfach und/oder über längere Zeiträume gültig sind.

In einer Ausführungsvariante wird das erste Synchronisierungssignal in der ersten Wiedergabevorrichtung erzeugt und das zweite Synchronisierungssignal wird in der zweiten Wiedergabevorrichtung erzeugt. Diese Ausführungsvariante ermöglicht eine maximale Unabhängigkeit der Wiedergabevorrichtungen. Die Synchronisierung der Wiedergabe der Berechtigungsdaten und der Wiedergabe der Referenzdaten erfolgt auf der Basis von Signalisierungssignalen, die unabhängig voneinander in den Wiedergabevorrichtungen erzeugt werden.

In einer Ausführungsvariante wird das erste Synchronisierungssignal in der ersten Wiedergabevorrichtung auf Grund eines Signals erzeugt, das in der ersten Wiedergabevorrichtung von der zweiten Wiedergabevorrichtung empfangen wurde, oder das zweite Synchronisierungssignal wird umgekehrt in der zweiten Wiedergabevorrichtung auf Grund eines Signals erzeugt, das in der zweiten Wiedergabevorrichtung von der ersten Wiedergabevorrichtung empfangen wurde. Diese Ausführungsvariante bedingt eine engere Kopplung der Wiedergabevorrichtungen, vorzugsweise über eine Geräteschnittstelle. Andererseits kann eine genauere Synchronisierung zwischen den Wiedergabevorrichtungen erreicht werden, da die Synchronisierung der Wiedergabe der Berechtigungsdaten und der Wiedergabe der Referenzdaten auf der Basis eines Synchronisierungssignals basiert, das in einer der Wiedergabevorrichtungen erzeugt wird.

In einer Ausführungsvariante werden das erste Synchronisierungssignal und das zweite Synchronisierungssignal in der ersten Wiedergabevorrichtung respektive in der zweiten Wiedergabevorrichtung auf Grund eines von einer computerbasierten Berechtigungszentrale empfangenen Signals erzeugt. Diese Ausführungsvariante hat den Vorteil, dass die Wiedergabevorrichtungen weder Zeitbestimmungsmittel zur Erzeugung der Synchronisierungssignale noch Geräteschnittstellen zur Synchronisierung der Synchronisierungssignale aufweisen müssen. Zusammen mit dem Signal zur Synchronisierung der Synchronisierungssignale können von der Berechtigungszentrale zudem Wiedergabeattribute und/oder Angaben zur Änderung der Wiedergabeattribute an die Wiedergabevorrichtungen übermittelt werden.

In einer Ausführungsvariante werden die Berechtigungsdaten in einem Datenspeicher einer computerbasierten Berechtigungszentrale gespeichert, und die Berechtigungsdaten und die Referenzdaten werden von der Berechtigungszentrale im Wesentlichen zeitsynchron über ein Telekommunikationsnetz an die erste Wiedergabevorrichtung respektive an die zweite Wiedergabevorrichtung übermittelt. Diese Ausführungsvariante ermöglicht, Berechtigungsdaten im so genannten Push-Modus dynamisch an die Wiedergabevorrichtungen zu übermitteln, wodurch das unberechtigte Kopieren von Berechtigungsdaten weiter erschwert wird.

Vorzugsweise erfolgt die Veränderung von Wiedergabeattributen in der Wiedergabe der Berechtigungsdaten und in der Wiedergabe der Referenzdaten auf Grund entsprechender Daten in den Berechtigungsdaten respektive in den Referenzdaten. Das heisst die Wiedergabeattribute werden während der Wiedergabe der Berechtigungsdaten und der Referenzdaten auf Grund von Regeldaten, Instruktionsdaten, Algorithmen und/oder Attributänderungsparametern geändert, die in den Berechtigungsdaten respektive Referenzdaten enthalten sind. Dadurch wird eine dynamische Änderung der Wiedergabeattribute unabhängig von einer Berechtigungszentrale ermöglicht.

In einer Ausführungsvariante erfolgt die Veränderung von Wiedergabeattributen in der Wiedergabe der Berechtigungsdaten und in der Wiedergabe der Referenzdaten auf Grund entsprechender Daten, die von einer Berechtigungszentrale über ein Telekommunikationsnetz an die erste Wiedergabevorrichtung respektive an die zweite Wiedergabevorrichtung übermittelt werden. Durch die dynamische Übermittlung von Angaben zur Veränderung der Wiedergabeattribute von der Berechtigungszentrale an die Wiedergabevorrichtungen wird die Vorhersehbarkeit der Veränderungen der Wiedergabeattribute ausgeschlossen.

Die erste Wiedergabevorrichtung ist in einer Ausführungsvariante als mobiles Kommunikationsendgerät ausgeführt. Mobile Kommunikationsendgeräte sind insbesondere geeignet, Berechtigungsdaten, Angaben zur Veränderung der Wiedergabeattribute und/oder Synchronisierungssignale dynamisch von einer Berechtigungszentrale über ein Mobilfunknetz zu empfangen. Die erste Wiedergabevorrichtung kann auch als Chipkarte ausgeführt sein, welche beispielsweise mit einer Anzeige versehen ist.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch Wiedergabevorrichtungen darstellt, die mit Benutzerschnittstellen versehen sind und zur Erzeugung eines Synchronisierungssignals eingerichtet sind.
Figur 2 zeigt ein Blockdiagramm, welches schematisch Wiedergabevorrichtungen darstellt, die mit Benutzerschnittstellen versehen sind und mit einer Berechtigungszentrale verbunden sind, welche zur Erzeugung eines Synchronisierungssignals eingerichtet ist.
Figur 3 zeigt ein Blockdiagramm, welches schematisch Wiedergabevorrichtungen darstellt, die mit Benutzerschnittstellen versehen sind, wobei eine der Wiedergabevorrichtungen eingerichtet ist, ein Synchronisierungssignal zu erzeugen und an die andere Wiedergabevorrichtung zu übertragen.
Figur 4 zeigt ein Blockdiagramm, welches schematisch Wiedergabevorrichtungen darstellt, die mit Benutzerschnittstellen versehen sind und mit einer Berechtigungszentrale verbunden sind, welche zur synchronisierten Übermittlung von Berechtigungsdaten an die Wiedergabevorrichtungen eingerichtet ist.
Figur 5a zeigt eine Zeitachse, entlang welcher über die Benutzerschnittstelle einer Wiedergabevorrichtung wiedergegebene Referenzdaten zu verschiedenen Zeitpunkten dargestellt werden.
Figur 5b zeigt eine Zeitachse, entlang welcher über die Benutzerschnittstelle einer Wiedergabevorrichtung wiedergegebene Berechtigungsdaten zu verschiedenen Zeitpunkten dargestellt werden.
Figur 6 zeigt ein Bild mit mehreren Bildsegmenten sowie ein Datenbeleg mit einer Bildobjektidentifizierung und einer Sequenz von Bildsegmentidentifizierungen.

### Wege zur Ausführung der Erfindung

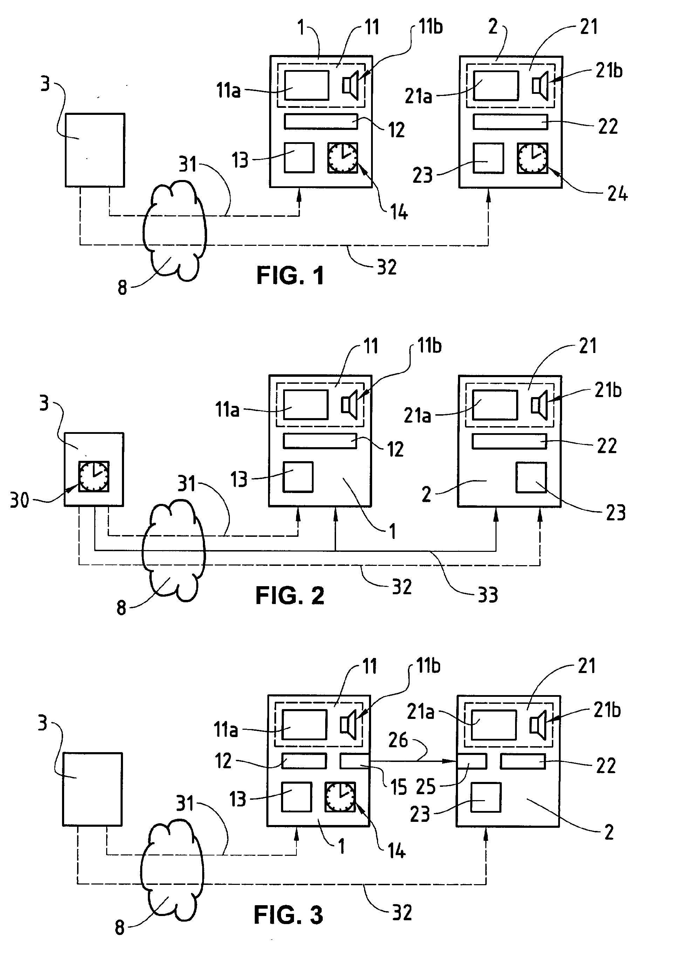

In den Figuren 1, 2, 3 und 4 bezieht sich das Bezugszeichen 3 auf eine computerbasierte Berechtigungszentrale, die einen oder mehrere Computer umfasst und über das Telekommunikationsnetz 8 mit den Wiedergabevorrichtungen 1, 2 verbindbar ist.

Das Telekommunikationsnetz 8 umfasst vorzugsweise ein Mobilfunknetz, beispielsweise ein GSM- (Global System for Mobile Communication), ein UMTS-Netz (Universal Mobile Telephone System) oder ein WLAN (Wireless Local Area Network). Das Telekommunikationsnetz 8 kann auch ein Festnetz umfassen, beispielsweise das Internet.

Die Wiedergabevorrichtungen 1, 2 sind vorzugsweise als mobile Kommunikationsendgeräte ausgeführt, beispielsweise Mobilfunktelefone, PDA-(Personal Data Assistant) oder Laptop-Computer. Die Wiedergabevorrichtungen 1, 2 können auch als feste Kommunikationsendgeräte oder als Chipkarten ausgeführt werden, wobei letztere zur Verbindung mit der Berechtigungszentrale 8 mit einem Kommunikationsendgerät, beispielsweise mit einem mobilen Kommunikationsendgerät, verbunden werden.

Wie in den Figuren 1, 2 und 3 dargestellt ist, umfasst die Wiedergabevorrichtung 1 einen Datenspeicher 13 zur Speicherung von Berechtigungsdaten und die Wiedergabevorrichtung 2 umfasst einen Datenspeicher 23 zur Speicherung von Referenzdaten. Wie in den Figuren 1, 2 und 3 mittels des gestrichelten Pfeils 31 schematisch dargestellt ist, werden die Berechtigungsdaten von der Berechtigungszentrale 3 über das Telekommunikationsnetz 8 an die Wiedergabevorrichtung 1 übermittelt und dort im Datenspeicher 13 gespeichert. In entsprechender Weise werden die Referenzdaten, wie in den Figuren 1, 2 und 3 mittels des gestrichelten Pfeils 32 schematisch dargestellt ist, von der Berechtigungszentrale 3 über das Telekommunikationsnetz 8 an die Wiedergabevorrichtung 2 übermittelt und dort im Datenspeicher 23 gespeichert. Die Berechtigungsdaten und die Referenzdaten können auch ohne Verwendung des Telekommunikationsnetzes 8 durch direkte Programmierung in den Datenspeichern 13 respektive 23 gespeichert werden, beispielsweise bei einer Verkaufsstelle oder bei einem Hersteller von mobilen Datenträgern.

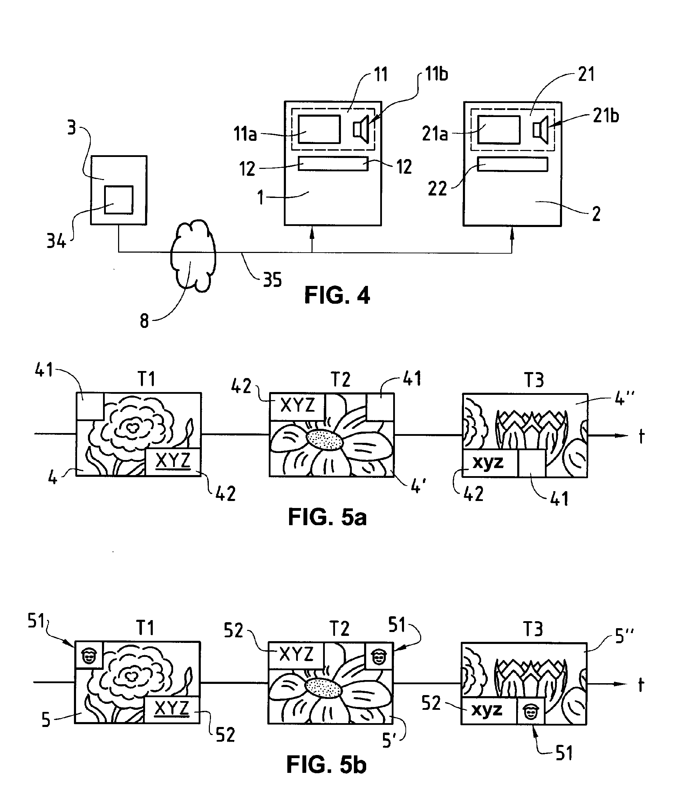

In der Figur 4 ist eine alternative Ausführungsvariante dargestellt, in der die Berechtigungsdaten respektive die Referenzdaten, wie mittels des gestrichelten Pfeils 35 schematisch dargestellt, von der Berechtigungszentrale 3 synchronisiert im Push-Modus über das Telekommunikationsnetz 8 zur Wiedergabe an die Wiedergabevorrichtungen 1 respektive 2 übermittelt werden.

Wie in den Figuren 1, 2, 3 und 4 schematisch dargestellt ist, umfassen die Wiedergabevorrichtungen 1, 2 jeweils eine Benutzerschnittstelle 11 respektive 21 zur Wiedergabe von Berechtigungsdaten respektive Referenzdaten. Die Benutzerschnittstellen 11, 21 umfassen vorzugsweise eine Anzeige 11a, 21a zur Darstellung von visuellen Objekten wie Bilder, Grafiken, Video und Text. Die Benutzerschnittstellen 11, 21 umfassen zudem einen elektroakustischen Wandler 11b, 21b (Lautsprecher, Kopfhörer) zur Wiedergabe von Audioobjekten wie Sprache, Klangmuster, Geräusche oder Musik. Die Benutzerschnittstelle 11 respektive 21 kann auch weitere Module zur Wiedergabe von Berechtigungsdaten respektive Referenzdaten umfassen, die über die Sinnesorgane eines Benutzers wahrgenommen werden können, zum Beispiel ein Vibrationsmodul oder ein Aktuatormodul zur Erzeugung von Codes, die vom Benutzer taktil wahrgenommen werden können (zum Beispiel in Blindenschrift).

Die Wiedergabevorrichtung 1 umfasst zudem ein Wiedergabemodul 12 um Berechtigungsdaten, die im Datenspeicher 13 gespeichert sind, über die Benutzerschnittstelle 11 wiederzugeben oder um Berechtigungsdaten, die im Push-Modus von der Berechtigungszentrale 3 empfangen wurden, über die Benutzerschnittstelle 11 wiederzugeben. Die Wiedergabevorrichtung 2 umfasst ein entsprechendes Wiedergabemodul 22 um Referenzdaten, die im Datenspeicher 23 gespeichert sind, über die Benutzerschnittstelle 21 wiederzugeben, oder um Referenzdaten, die im Push-Modus von der Berechtigungszentrale 3 empfangen wurden, über die Benutzerschnittstelle 21 wiederzugeben. Die Wiedergabe der Berechtigungsdaten respektive Referenzdaten durch die Wiedergabemodule 12 respektive 22 erfolgt vorzugsweise basierend auf einem Synchronisierungssignal, wie später näher beschrieben wird.

Die Berechtigungsdaten und die Referenzdaten umfassen Datenobjekte wie digitalisierte Bild-, Video-, Text-, Zahlen-, Grafik- und/oder Audioinformationen. Zudem umfassen die Berechtigungsdaten und die Referenzdaten vorzugsweise Angaben zur Veränderung von Wiedergabeattributen. Die Angaben zur Veränderung von Wiedergabeattributen können in der Ausführungsvariante nach Figur 2 auch von der Berechtigungszentrale 3, beispielsweise zusammen mit dem Synchronisierungssignal, an die Wiedergabevorrichtungen 1, 2 übermittelt werden. Die Wiedergabeattribute bestimmen die Wiedergabe der Berechtigungsdaten respektive die Wiedergabe der Referenzdaten. Die Wiedergabeattribute umfassen insbesondere visuelle Attribute von darstellbaren Objekten, wie Farbe, Orientierung, Bildausschnittidentifizierung, Position oder Schrifttyp, oder Audioattribute von akustisch wiedergebbaren Objekten, wie Lautstärke, Tonhöhe oder Tonlänge. Die Angaben zur Veränderung der Wiedergabeattribute umfassen Attributänderungsinstruktionen, Attributänderungsregeln und/oder Attributänderungsalgorithmen. Je nach Ausführung umfassen die Angaben zur Veränderung der Wiedergabeattribute auch Attributänderungsparameter wie Werte von Wiedergabeattributen und/oder Objektidentifizierungen.

Durch die Verwendung von Synchronisierungssignalen oder durch die Übermittlung von Berechtigungsdaten und Referenzdaten im Push-Modus wird eine Synchronisation der Wiedergabe der Berechtigungsdaten durch das Wiedergabemodul 12 und der Wiedergabe der Referenzdaten durch das Wiedergabemodul 22 erreicht. Bei der auf Synchronisierungssignalen basierenden Synchronisierung werden die Berechtigungsdaten und die Referenzdaten durch das Wiedergabemodul 12 respektive 22 basierend auf den zugeordneten Angaben zur Veränderung der Wiedergabeattribute wiedergegeben. Je nach Ausführung starten die Synchronisierungssignale automatisch ablaufende Attributänderungsalgorithmen oder sie initiieren die Ausführung einer Attributänderungsinstruktion oder Attributänderungsregel unter Verwendung von zugeordneten Werten von Wiedergabeattributen wie später an einem Beispiel illustriert wird. Durch die Ausführung eines Attributänderungsalgorithmus oder durch die Ausführung mehrerer Attributänderungsinstruktionen oder Attributänderungsregeln wird die Wiedergabe der Berechtigungsdaten und die Wiedergabe der Referenzdaten dynamisch verändert. Wenn eine Übereinstimmung zwischen der Wiedergabe der Berechtigungsdaten über die Benutzerschnittstelle 11 der Wiedergabevorrichtung 1 und der Wiedergabe der Referenzdaten über die Benutzerschnittstelle 21 der Wiedergabevorrichtung 2 besteht und die Veränderungen der Wiedergabeattribute dabei im Wesentlichen zeitsynchronisiert sind, kann dem Benutzer der Wiedergabevorrichtung 1 durch einen Kontrolleur, der die Wiedergabevorrichtung 2 benutzt, eine Berechtigung gewährt werden.

Die Synchronisierungssignale können periodische oder aperiodische Signale sein. Die Synchronisierungssignale sind beispielsweise abhängig von den Berechtigungsdaten respektive von den Referenzdaten.

In der Ausführungsvariante nach Figur 1 umfassen die Wiedergabevorrichtungen 1, 2 jeweils ein Synchronisierungsmodul 14 respektive 24 zur Erzeugung eines Synchronisierungssignals, das als Basis für die Wiedergabe der Berechtigungsdaten respektive der Referenzdaten dient. Die Synchronisierungsmodule 14, 24 umfassen beispielsweise ein Zeitbestimmungsmodul, das die aktuelle Zeit oder eine bestimmte Zeitdauer basierend auf einem Taktgenerator und/oder basierend auf empfangenen Zeitangaben bestimmt.

In der Ausführungsvariante nach Figur 3 umfasst nur eine der Wiedergabevorrichtungen 1, 2 ein Synchronisierungsmodul 14 zur Erzeugung des Synchronisierungssignals. Zusätzlich umfassen die Wiedergabevorrichtungen 1, 2 nach Figur 3 jedoch eine Geräteschnittstelle 15 respektive 25, um das erzeugte Synchronisierungssignal an die betreffende andere Wiedergabevorrichtung zu übertragen (Pfeil 26), beispielsweise eine Infrarotschnittstelle oder eine Funkgeräteschnittstelle wie "Bluetooth".

In der Ausführungsvariante nach Figur 2 umfasst die Berechtigungszentrale 3 ein Synchronisierungsmodul 30 zur Erzeugung und Übermittlung eines Synchronisierungssignals (Pfeil 33) an die Wiedergabevorrichtungen 1, 2.

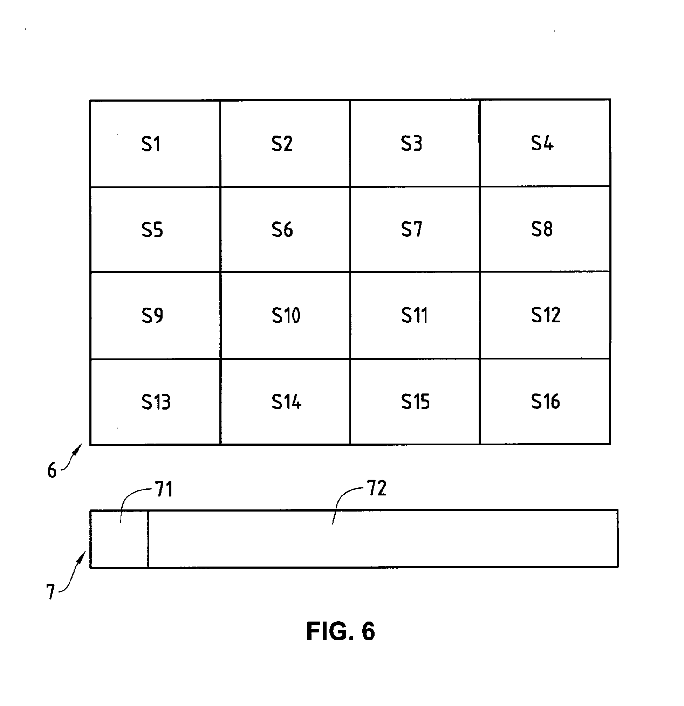

Die Berechtigungsdaten respektive Referenzdaten umfassen beispielsweise ein Bildobjekt 6, das mehrere Bildsegmente S1 bis S16 umfasst, wie in der Figur 6 schematisch dargestellt ist. Die Berechtigungsdaten respektive Referenzdaten umfassen zudem einen in der Figur 6 dargestellten Datenbeleg 7 mit Angaben zur Veränderung von Wiedergabeattributen. Der Datenbeleg 7 umfasst eine Bildobjektidentifizierung 71 zur Identifizierung des Bildobjekts 6 und eine zufallsgenerierte Sequenz 72 von Bildsegmentidentifizierungen der Bildsegmente S1 bis S16. Die Sequenz der Bildsegmentidentifizierungen kann auch durch einen Attributänderungsalgorithmus dynamisch erzeugt werden.

Synchronisiert durch Synchronisierungssignale bestimmen die Wiedergabemodule 12, 22 auf Grund der Bildobjektidentifizierung 71 das Bildobjekt 6 und wählen aus den Bildsegmenten S1 bis S16 dasjenige zur Wiedergabe aus, dass durch die erste Bildsegmentidentifizierung in der Sequenz 72 bestimmt ist. Die Bestimmung des Bildsegments durch die Wiedergabemodule 12, 22 erfolgt durch die Ausführung von entsprechenden Attributänderungsalgorithmen, Attributänderungsinstruktionen oder Attributänderungsregeln, die Teil der Softwaremodule der Wiedergabemodule 12, 22 sind oder die in den Angaben zur Veränderung von Wiedergabeattributen enthalten sind. Entsprechend dem betreffenden Attributänderungsalgorithmus oder den betreffenden Attributänderungsregeln wählen die Wiedergabemodule 12, 22 beim nächsten Signalisierungssignal oder nach einer vordefinierten Zeitdauer das nächste Bildsegment zur Wiedergabe aus, das durch die nächste Bildsegmentidentifizierung in der Sequenz 72 bestimmt ist. Den Bildsegmentidentifizierungen können in der Sequenz 72 jedoch auch Zeitangaben zugeordnet sein, welche bestimmen, welches der Bildsegmente S1 bis S16 zu einem bestimmten Zeitpunkt oder nach einer bestimmten Zeitdauer durch die Wiedergabemodule 12, 22 zur Wiedergabe gewählt wird.

Die Berechtigungsdaten respektive Referenzdaten umfassen zudem eine Dienstbezeichnung, beispielsweise die Bezeichnung einer Dienstleistung, eines Systems oder eines Gebäudes in Form von Textdaten. Der Dienstbezeichnung sind Angaben zur Veränderung von Wiedergabeattributen zugeordnet, die jeweils die Position und die Schriftart der Dienstbezeichnung für die Wiedergabe zu einem durch Synchronisationssignale bestimmten Zeitpunkt bestimmen.

Die Berechtigungsdaten respektive Referenzdaten umfassen optional auch eine Benutzeridentifizierungsfeld, das heisst, Angaben zur Bestimmung eines Anzeigesegments, in welchem eine Benutzeridentifizierung darstellbar ist. Dem Benutzeridentifizierungsfeld sind Angaben zur Veränderung von Wiedergabeattributen zugeordnet, die jeweils die Position des Benutzeridentifizierungsfelds für die Wiedergabe der Benutzeridentifizierung zu einem durch Synchronisationssignale bestimmten Zeitpunkt bestimmen.

In den folgenden Abschnitten wird mit Bezug auf die Figuren 5a und 5b der Verfahrensablauf bei einer Berechtigungskontrolle beschrieben. Bei der Berechtigungskontrolle werden die Wiedergabemodule 12, 22 zur Wiedergabe der Berechtigungsdaten respektive Referenzdaten aktiviert. Auf die Wahl der betreffenden Berechtigungsdaten respektive Referenzdaten für die betreffende Dienstleistung oder den Zugang zum betreffenden System oder Gebäude wird hier nicht näher eingegangen. Auch auf die Möglichkeit der Teilentwertung von Berechtigungsdaten, beispielsweise wie bei Mehrfahrtenkarten, wird hier nicht näher eingegangen. In der Figur 5a sind die Bildinhalte dargestellt, die zu den Zeitpunkten T1, T2 und T3 auf der Anzeige 21 a der Wiedergabevorrichtung 2 dargestellt werden. In der Figur 5b sind die Bildinhalte dargestellt, die zu denselben Zeitpunkten T1, T2 und T3 auf der Anzeige 11a der Wiedergabevorrichtung 1 dargestellt werden.

In der Figur 5a bezeichnet das Bezugszeichen 4 den Bildinhalt, der zum Zeitpunkt T1 auf der Anzeige 21a der Wiedergabevorrichtung 2 dargestellt wird. Der wiedergegebene Bildinhalt 4 beruht auf der Wiedergabe der Referenzdaten, die im Datenspeicher 23 gespeichert sind oder im Push-Modus über das Telekommunikationsnetz 8 in der Wiedergabevorrichtung 2 empfangen werden. Der wiedergegebene Bildinhalt 4 wird einerseits durch die Angaben zur Veränderung der Wiedergabeattribute bestimmt, die in den Referenzdaten enthalten sind oder über das Telekommunikationsnetz 8 in der Wiedergabevorrichtung 2 empfangen werden, und andererseits durch das Synchronisierungssignal, das in der Wiedergabevorrichtung 2 erzeugt wird oder über das Telekommunikationsnetz 8 oder die Geräteschnittstelle 25 in der Wiedergabevorrichtung 2 empfangen wird. Der Bildinhalt 4 umfasst ein Bildobjekt, z.B. eine Blume, das beispielsweise wie oben mit Bezug zu Figur 6 beschrieben bestimmt wird. Neben dem Bildobjekt der Blume umfasst der Bildinhalt 4 ein Benutzeridentifizierungsfeld 41 zur Wiedergabe einer Benutzeridentifizierung, wobei die geometrische Position des Benutzeridentifizierungsfeldes 41 durch ein entsprechendes, zum Zeitpunkt T1 aktives Wiedergabeattribut bestimmt ist. Zudem umfasst der Bildinhalt 4 eine Dienstbezeichnung 42, deren geometrische Position und deren Schriftart durch entsprechende, zum Zeitpunkt T1 aktive Wiedergabeattribute bestimmt sind.

In der Figur 5b bezeichnet das Bezugszeichen 5 den Bildinhalt, der zum Zeitpunkt T1 auf der Anzeige 11a der Wiedergabevorrichtung 1 dargestellt wird. Der wiedergegebene Bildinhalt 5 beruht auf der Wiedergabe der Berechtigungsdaten, die im Datenspeicher 13 gespeichert sind oder im Push-Modus über das Telekommunikationsnetz 8 in der Wiedergabevorrichtung 1 empfangen werden. Der wiedergegebene Bildinhalt 5 wird einerseits durch die Angaben zur Veränderung der Wiedergabeattribute bestimmt, die in den Berechtigungsdaten enthalten sind oder über das Telekommunikationsnetz 8 in der Wiedergabevorrichtung 1 empfangen werden, und andererseits durch das Synchronisierungssignal, das in der Wiedergabevorrichtung 1 erzeugt wird oder über das Telekommunikationsnetz 8 oder die Geräteschnittstelle 15 in der Wiedergabevorrichtung 1 empfangen wird. Wenn die wiedergegebenen Berechtigungsdaten zu einer gewährbaren Berechtigung führen sollen, umfasst der Bildinhalt 5 das selbe Bildobjekt, d.h. die selbe Blume, wie im Bildinhalt 4. Zudem muss der Bildinhalt 5 ein Benutzeridentifizierungsfeld 51 umfassen, dessen geometrische Position derjenigen des Benutzeridentifizierungsfeldes 41 entspricht. Schliesslich muss der Bildinhalt 5 dieselbe Dienstbezeichnung 52 umfassen mit einer geometrischen Position und Schriftart, die denjenigen der Dienstbezeichnung 42 entsprechen. Wie in der Figur 5a dargestellt ist, wird im Benutzeridentifizierungsfeld 51 eine Benutzeridentifizierung dargestellt, beispielsweise ein Bild des Benutzers oder sein Name. Die Benutzeridentifizierung kann beispielsweise fest in der Wiedergabevorrichtung 1 gespeichert oder Teil der Berechtigungsdaten sein oder auf einer in einer SIM-Karte (Subscriber Identity Module) gespeicherten Teilnehmeridentifizierung basieren.

Um jedoch eine Berechtigung zu gewähren, vergleicht der Kontrolleur die Wiedergabe der Referenzdaten auf der Anzeige 21a seiner Wiedergabevorrichtung 2 mit der Wiedergabe der Berechtigungsdaten auf der Anzeige 11a der Wiedergabevorrichtung 1 des Benutzers während weiteren Zeitpunkten T2 und T3, die beispielsweise eine oder mehrere Sekunden auseinander liegen. Wie aus den Figuren 5a und 5b ersichtlich ist, ändern sich in den Bildinhalten 4' und 5' zum Zeitpunkt T2 und in den Bildinhalten 4" und 5" zum Zeitpunkt T3 jeweils die Wiedergabeattribute. Es wird jeweils ein anderes Bildsegment des Bildobjekts 6 wiedergegeben, die Position und die Schriftart der Dienstbezeichnung 42 respektive 52 ändern sich und die Position des Benutzeridentifizierungsfelds 41 respektive 51 verschiebt sich.

An dieser Stelle soll angeführt werden, dass in einer Ausführungsvariante eine Berechtigung auch gewährt werden kann, wenn die Wiedergabe der Referenzdaten auf der Anzeige 21a der Wiedergabevorrichtung 2 des Kontrolleurs und die Wiedergabe der Berechtigungsdaten auf der Anzeige 11a der Wiedergabevorrichtung 1 des Benutzers zeitlich leicht verschoben erfolgt, beispielsweise wenn wiedergegebene Bildsequenzen nicht genau synchronisiert sind. Dazu ist es beispielsweise nützlich, wenn Bildinhalte nur teilweise ändern, so dass selbst bei nicht perfekter Synchronisation, wenigstens diejenigen Bildinhalte verglichen werden können, die sich bei einem Sequenzübergang nicht ändern.

Das beschriebene Verfahren wird vorzugsweise für die Berechtigungskontrolle in Fällen eingesetzt, in denen die Wiedergabevorrichtungen 1, 2 des Dienstbenutzers und des Kontrolleurs am Ort der Dienstleistung verglichen werden können, beispielsweise in öffentlichen Verkehrsmitteln oder bei der Zutrittskontrolle zu Sportveranstaltungen, Theater oder Kinos. Das beschriebene Verfahren kann aber auch eingesetzt werden, wenn die Wiedergabevorrichtungen 1, 2 des Dienstbenutzers und des Kontrolleurs voneinander entfernt sind. Im letzteren Fall beschreibt der Dienstbenutzer dem Kontrolleur die Wiedergabe der Berechtigungsdaten über eine Kommunikationsverbindung und der Kontrolleur vergleicht die Beschreibung mit der Wiedergabe der Referenzdaten. Bei voneinander entfernten Wiedergabevorrichtungen 1, 2 eignen sich insbesondere auch Berechtigungsdaten, die akustisch wiedergegeben und über eine Kommunikationsverbindung, beispielsweise eine Telefonverbindung, dem Kontrolleur zum Vergleich mit der akustischen Wiedergabe der Referenzdaten übermittelt werden.

## Patentansprüche

1. Berechtigungskontrollverfahren, das eine Wiedergabe von Berechtigungsdaten über eine Benutzerschnittstelle (11) einer ersten elektronischen Wiedergabevorrichtung (1) umfasst, **gekennzeichnet durch**
Veränderung von Wiedergabeattributen während der Wiedergabe der Berechtigungsdaten über die Benutzerschnittstelle (11) der ersten Wiedergabevorrichtung (1),
Vergleichen der Wiedergabe der Berechtigungsdaten über die Benutzerschnittstelle (11) der ersten Wiedergabevorrichtung (1) mit der Wiedergabe von Referenzdaten über eine Benutzerschnittstelle (21) einer zweiten elektronischen Wiedergabevorrichtung (2), und
Gewährung der Berechtigung, wenn eine Übereinstimmung zwischen der Wiedergabe der Berechtigungsdaten über die Benutzerschnittstelle (11) der ersten Wiedergabevorrichtung (1) und der Wiedergabe der Referenzdaten über die Benutzerschnittstelle (21) der zweiten Wiedergabevorrichtung (2) besteht und Veränderungen der Wiedergabeattribute im Wesentlichen zeitsynchronisiert sind.

2. Berechtigungskontrollverfahren nach Anspruch 1, **dadurch gekennzeichnet, dass** die Berechtigungsdaten in einem Datenspeicher (13) der ersten Wiedergabevorrichtung (1) gespeichert werden, dass die Referenzdaten in einem Datenspeicher (23) der zweiten Wiedergabevorrichtung (2) gespeichert werden, dass die Wiedergabe der Berechtigungsdaten über die Benutzerschnittstelle (11) der ersten Wiedergabevorrichtung (1) auf einem ersten Synchronisierungssignal basiert, und dass die Wiedergabe der Referenzdaten über die Benutzerschnittstelle (21) der zweiten Wiedergabevorrichtung (2) auf einem zweiten Synchronisierungssignal basiert.

3. Berechtigungskontrollverfahren nach Anspruch 2, **dadurch gekennzeichnet, dass** das erste Synchronisierungssignal in der ersten Wiedergabevorrichtung (1) erzeugt wird und dass das zweite Synchronisierungssignal in der zweiten Wiedergabevorrichtung (2) erzeugt wird.

4. Berechtigungskontrollverfahren nach Anspruch 2, **dadurch gekennzeichnet, dass** das erste Synchronisierungssignal in der ersten Wiedergabevorrichtung (1) auf Grund eines Signals erzeugt wird, das in der ersten Wiedergabevorrichtung (1) von der zweiten Wiedergabevorrichtung (2) empfangen wurde, oder dass das zweite Synchronisierungssignal in der zweiten Wiedergabevorrichtung (2) auf Grund eines Signals erzeugt wird, das in der zweiten Wiedergabevorrichtung (2) von der ersten Wiedergabevorrichtung (1) empfangen wurde.

5. Berechtigungskontrollverfahren nach Anspruch 2, **dadurch gekennzeichnet, dass** das erste Synchronisierungssignal und das zweite Synchronisierungssignal in der ersten Wiedergabevorrichtung (1) respektive in der zweiten Wiedergabevorrichtung (2) auf Grund eines von einer computerbasierten Berechtigungszentrale (3) empfangenen Signals erzeugt werden.

6. Berechtigungskontrollverfahren nach Anspruch 1, **dadurch gekennzeichnet, dass** die Berechtigungsdaten in einem Datenspeicher (34) einer computerbasierten Berechtigungszentrale (3) gespeichert werden, und dass die Berechtigungsdaten und die Referenzdaten von der Berechtigungszentrale (3) im Wesentlichen zeitsynchron über ein Telekommunikationsnetz (8) an die erste Wiedergabevorrichtung (1) respektive an die zweite Wiedergabevorrichtung (2) übermittelt werden.

7. Berechtigungskontrollverfahren nach einem der Ansprüche 1 bis 6, **dadurch gekennzeichnet, dass** die Veränderung von Wiedergabeattributen in der Wiedergabe der Berechtigungsdaten und in der Wiedergabe der Referenzdaten auf Grund entsprechender Daten in den Berechtigungsdaten respektive in den Referenzdaten erfolgt.

8. Berechtigungskontrollverfahren nach einem der Ansprüche 1 bis 7 **dadurch gekennzeichnet, dass** die Veränderung von Wiedergabeattributen in der Wiedergabe der Berechtigungsdaten und in der Wiedergabe der Referenzdaten auf Grund entsprechender Daten erfolgt, die von einer Berechtigungszentrale (3) über ein Telekommunikationsnetz (8) an die erste Wiedergabevorrichtung (1) respektive an die zweite Wiedergabevorrichtung (2) übermittelt werden.

9. Berechtigungskontrollverfahren nach einem der Ansprüche 1 bis 8, **dadurch gekennzeichnet, dass** eine Anzeige (11a, 21a) als Benutzerschnittstelle (11, 21) verwendet wird, auf der die Berechtigungsdaten und die Referenzdaten darstellbar sind, und dass Wiedergabeattribute verwendet werden, die visuelle Attribute wie Farbangaben, Orientierungsangaben, Angaben zur Bestimmung eines Bildausschnitts oder Positionsangaben umfassen.

10. Berechtigungskontrollverfahren nach einem der Ansprüche 1 bis 9, **dadurch gekennzeichnet, dass** Berechtigungsdaten und Referenzdaten verwendet werden, die Dienstbezeichnungen umfassen, und dass Wiedergabeattribute verwendet werden, die Angaben über Schriftarten umfassen.

11. Berechtigungskontrollverfahren nach einem der Ansprüche 1 bis 10, **dadurch gekennzeichnet, dass** Berechtigungsdaten verwendet werden, die Benutzeridentifizierungsdaten umfassen, und dass die Wiedergabe der Benutzeridentifizierungsdaten durch die Wiedergabeattribute bestimmt wird.

12. Berechtigungskontrollverfahren nach einem der Ansprüche 1 bis 11, **dadurch gekennzeichnet, dass** ein elektroakustischer Wandler (11b, 21b) als Benutzerschnittstelle (11, 21) verwendet wird über den die Berechtigungsdaten und die Referenzdaten wiedergebbar sind, und dass Wiedergabeattribute verwendet werden, die Audioattribute wie Angaben über Lautstärke, Tonhöhe oder Tonlänge umfassen.

13. System zur Berechtigungskontrolle, das eine erste elektronische Wiedergabevorrichtung (1) mit einer Benutzerschnittstelle (11) zur Wiedergabe von Berechtigungsdaten umfasst, **gekennzeichnet durch**
eine zweite elektronische Wiedergabevorrichtung (2) mit einer Benutzerschnittstelle (21) zur Wiedergabe von Referenzdaten, und
Mittel zur Wiedergabe der Berechtigungsdaten über die Benutzerschnittstelle (11) der ersten Wiedergabevorrichtung (1) und zur Veränderung von Wiedergabeattributen während der Wiedergabe der Berechtigungsdaten im Wesentlichen zeitsynchronisiert mit der Wiedergabe der Referenzdaten über die Benutzerschnittstelle (21) der zweiten Wiedergabevorrichtung (2), respektive mit Veränderungen von Wiedergabeattributen während der Wiedergabe der Referenzdaten.

14. System nach Anspruch 13, **dadurch gekennzeichnet, dass** die erste Wiedergabevorrichtung (1) einen Datenspeicher (13) umfasst, in welchem die Berechtigungsdaten gespeichert sind, dass die zweite Wiedergabevorrichtung (2) einen Datenspeicher (23) umfasst, in welchem die Referenzdaten gespeichert sind, dass die erste Wiedergabevorrichtung (1) eingerichtet ist, die Berechtigungsdaten basierend auf einem ersten Synchronisierungssignal über die Benutzerschnittstelle (11) der ersten Wiedergabevorrichtung (1) wiederzugeben, und dass die zweite Wiedergabevorrichtung (2) eingerichtet ist, die Referenzdaten basierend auf einem zweiten Synchronisierungssignal über die Benutzerschnittstelle (21) der zweiten Wiedergabevorrichtung (2) wiederzugeben.

15. System nach Anspruch 14, **dadurch gekennzeichnet, dass** die erste Wiedergabevorrichtung (1) eingerichtet ist, das erste Synchronisierungssignal zu erzeugen, und dass die zweite Wiedergabevorrichtung (2) eingerichtet ist das zweite Synchronisierungssignal zu erzeugen.

16. System nach Anspruch 14, **dadurch gekennzeichnet, dass** die erste Wiedergabevorrichtung (1) eingerichtet ist, ein Signal von der zweiten Wiedergabevorrichtung (2) zu empfangen und das erste Synchronisierungssignal auf Grund des empfangenen Signals zu erzeugen, oder dass die zweite Wiedergabevorrichtung (2) eingerichtet ist, ein Signal von der ersten Wiedergabevorrichtung (1) zu empfangen und das zweite Synchronisierungssignal auf Grund des empfangenen Signals zu erzeugen.

17. System nach Anspruch 14, **dadurch gekennzeichnet, dass** die erste Wiedergabevorrichtung (1) und die zweite Wiedergabevorrichtung (2) eingerichtet sind ein Signal von einer computerbasierten Berechtigungszentrale (3) zu empfangen, und dass die erste Wiedergabevorrichtung (1) und die zweite Wiedergabevorrichtung (2) eingerichtet sind, das erste Synchronisierungssignal respektive das zweite Synchronisierungssignal auf Grund des empfangenen Signals zu erzeugen.

18. System nach Anspruch 13, **dadurch gekennzeichnet, dass** das System eine computerbasierte Berechtigungszentrale (3) mit einem Datenspeicher (34) umfasst, in welchem die Berechtigungsdaten gespeichert sind, und dass die Berechtigungszentrale (3) eingerichtet ist, die Berechtigungsdaten und die Referenzdaten im Wesentlichen zeitsynchron über ein Telekommunikationsnetz (8) an die erste Wiedergabevorrichtung (1) respektive an die zweite Wiedergabevorrichtung (2) zu übermitteln.

19. System nach einem der Ansprüche 13 bis 18, **dadurch gekennzeichnet, dass** die Mittel zur Veränderung der Wiedergabeattribute während der Wiedergabe der Berechtigungsdaten eingerichtet sind, die Veränderung der Wiedergabeattribute auf Grund entsprechender Daten in den Berechtigungsdaten vorzunehmen.

20. System nach einem der Ansprüche 13 bis 19, **dadurch gekennzeichnet, dass** das System eine computerbasierte Berechtigungszentrale (3) umfasst, welche eingerichtet ist, Attributdaten über ein Telekommunikationsnetz (8) an die erste Wiedergabevorrichtung (1) und an die zweite Wiedergabevorrichtung (2) zu übermitteln, und dass die Mittel zur Veränderung der Wiedergabeattribute während der Wiedergabe der Berechtigungsdaten eingerichtet sind, die Veränderung der Wiedergabeattribute auf Grund entsprechender Attributdaten vorzunehmen, die von der Berechtigungszentrale (3) empfangen wurden.

21. System nach einem der Ansprüche 13 bis 20, **dadurch gekennzeichnet, dass** die Benutzerschnittstellen (11, 21) jeweils eine Anzeige (11a, 21a) zur Darstellung der Berechtigungsdaten respektive Referenzdaten umfassen, und dass die Wiedergabeattribute visuelle Attribute wie Farbangaben, Orientierungsangaben, Angaben zur Bestimmung eines Bildausschnitts, Positionsangaben oder Angaben über Schriftarten umfassen.

22. System nach einem der Ansprüche 13 bis 21, **dadurch gekennzeichnet, dass** die Benutzerschnittstellen jeweils einen elektroakustischen Wandler (11b, 21b) zur Wiedergabe der Berechtigungsdaten respektive Referenzdaten umfassen, und dass die Wiedergabeattribute Audioattribute wie Angaben über Lautstärke, Tonhöhe oder Tonlänge umfassen.

23. System nach einem der Ansprüche 13 bis 22, **dadurch gekennzeichnet, dass** die erste Wiedergabevorrichtung (1) als mobiles Kommunikationsendgerät ausgeführt ist.

24. System nach einem der Ansprüche 13 bis 23, **dadurch gekennzeichnet, dass** die erste Wiedergabevorrichtung (1) als Chipkarte ausgeführt ist.

25. Computerprogrammprodukt, das ein computerlesbares Medium mit darin enthaltenen Computerprogrammcodemitteln umfasst zur Steuerung eines oder mehrerer Prozessoren einer in einem Berechtigungskontrollverfahren verwendbaren ersten elektronischen Wiedergabevorrichtung (1), derart,
dass die erste Wiedergabevorrichtung (1) Berechtigungsdaten über eine Benutzerschnittstelle (11) der ersten Wiedergabevorrichtung (1) wiedergibt und während der Wiedergabe der Berechtigungsdaten Wiedergabeattribute verändert, wobei die Wiedergabe der Berechtigungsdaten und die Veränderungen der Wiedergabeattribute während der Wiedergabe der Berechtigungsdaten im Wesentlichen zeitsynchronisiert erfolgt mit einer Wiedergabe von Referenzdaten über eine Benutzerschnittstelle (21) einer zweiten elektronischen Wiedergabevorrichtung (2) respektive mit Veränderungen von Wiedergabeattributen während der Wiedergabe der Referenzdaten.

26. Computerprogrammprodukt gemäss Anspruch 25, **dadurch gekennzeichnet, dass** es weitere Computerprogrammcodemittel umfasst, die die Prozessoren der ersten Wiedergabevorrichtung (1) derart steuern, dass die Berechtigungsdaten in einem Datenspeicher (13) der ersten Wiedergabevorrichtung gespeichert werden, und dass die erste Wiedergabevorrichtung (1) die Berechtigungsdaten basierend auf einem Synchronisierungssignal über die Benutzerschnittstelle (11) der ersten Wiedergabevorrichtung (1) wiedergibt.

27. Computerprogrammprodukt gemäss Anspruch 26, **dadurch gekennzeichnet, dass** es weitere Computerprogrammcodemittel umfasst, die die Prozessoren der ersten Wiedergabevorrichtung (1) derart steuern, dass die erste Wiedergabevorrichtung (1) das Synchronisierungssignal erzeugt.

28. Computerprogrammprodukt gemäss Anspruch 26, **dadurch gekennzeichnet, dass** es weitere Computerprogrammcodemittel umfasst, die die Prozessoren der ersten Wiedergabevorrichtung (1) derart steuern, dass die erste Wiedergabevorrichtung (1) das Synchronisierungssignal auf Grund eines Signals erzeugt, das die erste Wiedergabevorrichtung (1) von der zweiten Wiedergabevorrichtung (2) empfängt, oder dass die erste Wiedergabevorrichtung (1) ein Signal an die zweite Wiedergabevorrichtung (2) übermittelt zur Erzeugung eines Synchronisierungssignals in der zweiten Wiedergabevorrichtung (2).

29. Computerprogrammprodukt gemäss Anspruch 26, **dadurch gekennzeichnet, dass** es weitere Computerprogrammcodemittel umfasst, die die Prozessoren der ersten Wiedergabevorrichtung (1) derart steuern, dass die erste Wiedergabevorrichtung (1) ein Signal von einer computerbasierten Berechtigungszentrale (3) über ein Telekommunikationsnetz (8) entgegennimmt, und dass die erste Wiedergabevorrichtung (1) das Synchronisierungssignal auf Grund des entgegengenommenen Signals erzeugt.

30. Computerprogrammprodukt gemäss einem der Ansprüche 25 bis 29, **dadurch gekennzeichnet, dass** es weitere Computerprogrammcodemittel umfasst, die die Prozessoren der ersten Wiedergabevorrichtung (1) derart steuern, dass die erste Wiedergabevorrichtung (1) die Berechtigungsdaten über ein Telekommunikationsnetz (8) von einer computerbasierten Berechtigungszentrale (3) entgegennimmt.
